# EUROPÄISCHE PATENTANMELDUNG

(11) **EP 4 810 346 A1**
(43) Veröffentlichungstag der Anmeldung: **23.09.2026**
(21) Anmeldenummer: 26156958.6
(22) Anmeldetag: 06.02.2026
(51) Int. Cl.: B62B 3/00, B62B 3/02, B62B 3/16

(54) **ROLLBEHÄLTER**

(30) Priorität: 19.03.2025 DE 202025101489 U; 01.10.2025 DE 202025105992 U
(71) Anmelder: Pilsl Transportgeräte GmbH, 94110 Wegscheid (DE)
(72) Erfinder: Pilsl, Christian, 94107 Untergriesbach (DE)
(74) Vertreter: advotec.

(57) **Zusammenfassung**

Die Erfindung betrifft einen Rollbehälter, insbesondere eine Rollpalette, umfassend einen Behälterboden (2, 17, 23) und zwei Seitenwände (3), die an in Längsrichtung (x) gegenüberliegenden Seiten des Behälterbodens (2, 17, 23) angeordnet sind und jeweils einen ersten Längsholm (4), der in einer ersten Seitenwandöffnung (7) des Behälterbodens (2, 17, 23) angeordnet ist, und einen zweiten Längsholm (5) umfassen, der in einer zweiten Seitenwandöffnung (8) des Behälterbodens (2, 17, 23) angeordnet ist, wobei die ersten Seitenwandöffnungen (7) miteinander in Längsrichtung (x) fluchten und die zweiten Seitenwandöffnungen (8) miteinander in Längsrichtung (x) fluchten, wobei der Behälterboden (2, 17) mindestens eine Seitenwandlageröffnung, in welche zur Lagerung einer weiteren Seitenwand (12) an dem Behälterboden (2, 17) ein Längsholm der weiteren Seitenwand (12) einbringbar ist, und mindestens eine erste und zweite Rastelementaussparung (11, 20) zur Aufnahme eines Rastelements (6) der weiteren Seitenwand (12) aufweist; und/oder
wobei mindestens eine Lagerleiste (25, 26, 30, 31) lösbar fixiert ist, zur Lagerung einer weiteren Seitenwand (12).

## Beschreibung

Die vorliegende Erfindung betrifft einen Rollbehälter, insbesondere eine Rollpalette, umfassend einen Behälterboden und zwei Seitenwände. Die Seitenwände sind in Längsrichtung an gegenüberliegenden Seiten des Behälterbodens angeordnet und umfassen jeweils einen ersten Längsholm, der in einer ersten Seitenwandöffnung des Behälterbodens angeordnet ist und einen in einer zweiten Seitenwandöffnung des Behälterbodens angeordneten zweiten Längsholm.

Rollbehälter sind in verschiedenen Ausgestaltungsformen aus dem Stand der Technik bekannt. Die bekannten Rollbehälter umfassen regelmäßig einen Behälterboden, an welchem an zwei sich in Längsrichtung gegenüberliegenden Seiten zwei Seitenwände lösbar fixiert sind. Zur Lagerung und zum Transport werden leere Rollbehälter regelmäßig auseinandergebaut bzw. demontiert, d.h. die Seitenwände werden von den Behälterböden entfernt. Die entfernten Seitenwände werden dann auf einem Behälterboden eines zusammengebauten Rollbehälters nebeneinander gelagert. Da die Seitenwände hierbei lediglich auf den Behälterboden aufgelegt sind, können diese beispielswiese bei einem Transport von dem Rollbehälter herunterfallen. Zudem kann das Auflegen der Seitenwände auf den Rollbehälter eine Beschädigung des Rollbehälters verursachen. Insbesondere werden die demontierten Seitenwände zur Lagerung in der Regel an eine Seitenwand des zusammengebauten, lagernden Rollbehälters angelehnt. Dies verursacht eine Biegebeanspruchung von Einsteckbereichen des Behälterbodens, in welchen die Seitenwand an dem Behälterboden gelagert ist. Diese Biegebeanspruchung kann ein Ausreißen und/oder Abbrechen von Eckbereichen des Behälterbodens zu Folge haben.

Aufgabe der vorliegenden Erfindung ist es, einen Rollbehälter bereitzustellen, auf welchem auf einfache Weise weitere Rollbehälter, insbesondere Seitenwände weiterer Rollbehälter, sicher lagerbar und transportierbar sind, ohne dass hierbei der Rollbehälter beschädigt wird.

Diese Aufgabe ist erfindungsgemäß durch den Rollbehälter mit den Merkmalen des Anspruchs 1 gelöst.

Erfindungsgemäß wird also ein Rollbehälter, insbesondere eine Rollpalette, vorgeschlagen, umfassend einen Behälterboden und zwei Seitenwände. Die Seitenwände sind an in Längsrichtung gegenüberliegenden Seiten des Behälterbodens angeordnet und umfassen jeweils einen ersten Längsholm und einen zweiten Längsholm. Die ersten Längsholme sind jeweils in einer ersten Seitenwandöffnung des Behälterbodens angeordnet. Die zweiten Längsholme sind jeweils in einer zweiten Seitenwandöffnung des Behälterbodens angeordnet. Die ersten Seitenwandöffnungen fluchten in Längsrichtung miteinander. Ebenso fluchten die zweiten Seitenwandöffnungen in Längsrichtung miteinander. Die ersten Seitenwandöffnungen sind in Querrichtung an einer den zweiten Seitenwandöffnungen gegenüberliegenden Seite in dem Behälterboden ausgebildet. Der Behälterboden umfasst mindestens eine Seitenwandlageröffnung, in welche zur Lagerung einer weiteren Seitenwand an dem Behälterboden ein Längsholm der weiteren Seitenwand einbringbar ist, und der Behälterboden weist mindestens eine erste Rastelementaussparung und mindestens eine zweite Rastelementaussparung zur Aufnahme eines Rastelements der weiteren Seitenwand auf. Die erste Rastelementaussparung fluchtet in Querrichtung mit der zweiten Rastelementaussparung teilweise oder vollständig. Zusätzlich oder alternativ ist an dem Behälterboden und/oder an den zwei Seitenwänden, insbesondere an sich in Längsrichtung gegenüberliegenden Längsholmen der Seitenwände, mindestens eine Lagerleiste lösbar fixiert, welche mindestens eine Lagerleistenseitenwandlageröffnung aufweist, in welche zur Lagerung einer weiteren Seitenwand an dem Behälterboden ein Längsholm der weiteren Seitenwand einbringbar ist.

Kerngedanke der Erfindung ist es also, den Behälterboden mit einer Seitenwandlageröffnung und mindestens zwei in Querrichtung miteinander zumindest teilweise fluchtenden Rastelementaussparungen zu versehen, und/oder eine Lagerleiste an dem Behälterboden und/oder an den zwei Seitenwänden lösbar zu fixieren, welche eine Lagerleistenseitenwandlageröffnung umfasst. Eine weitere Seitenwand ist somit auf einfache Weise, sicher an dem Behälterboden lagerbar.

Die Seitenwandlageröffnung und/oder die Lagerleistenseitenwandlageröffnung können/kann den Seitenwandöffnungen, insbesondere in ihrer Geometrie, entsprechen.

Bei einer beispielhaften Ausführungsform des Rollbehälters nach der Erfindung umfasst der Behälterboden mindestens ein Seitenwandlageröffnungspaar. Das Seitenwandlageröffnungspaar ist aus zwei Seitenwandlageröffnungen gebildet, in welche zur Lagerung einer weiteren Seitenwand an dem Behälterboden Längsholme der weiteren Seitenwand einbringbar sind.

Eine erste der Seitenwandlageröffnungen des Seitenwandlageröffnungspaars fluchtet beispielsweise mit den ersten Seitenwandöffnungen in Längsrichtung. Die zweite Seitenwandlageröffnung des Seitenwandlageröffnungspaars fluchtet beispielsweise mit den zweiten Seitenwandöffnungen in Längsrichtung. Die erste Seitenwandlageröffnung fluchtet beispielsweise wiederum mit der zweiten Seitenwandlageröffnung in Querrichtung.

Bei einer bevorzugten Ausführungsform umfasst der Rollbehälter nach der Erfindung mindestens zwei, drei, vier oder eine Vielzahl von Seitenwandlageröffnungspaaren.

Die Seitenwandlageröffnungspaare sind beispielsweise in Längsrichtung nebeneinander angeordnet, insbesondere jeweils in einem gleichen Abstand zu benachbarten Seitenwandlageröffnungspaaren.

Bei einer beispielhaften Ausführungsform des Rollbehälters nach der Erfindung ist die Seitenwandlageröffnung in Längsrichtung zwischen den ersten Seitenwandöffnungen und zwischen den zweiten Seitenwandöffnungen angeordnet. Die Seitenwandlageröffnung ist in Querrichtung relativ zu den ersten Seitenwandöffnungen derart nach innen, das heißt in Richtung einer Längsmittelebene des Behälterbodens bzw. in Richtung der zweiten Seitenwandöffnungen, oder relativ zu den zweiten Seitenwandöffnungen derart nach innen versetzt, also in Richtung der Längsmittelebene des Behälterbodens bzw. in Richtung der ersten Seitenwandöffnungen, dass bei Anordnung eines ersten Längsholmes der weiteren Seitenwand in der Seitenwandlageröffnung der zweite Längsholm der weiteren Seitenwand, in Querrichtung an einer Seite des Behälterbodens hervorsteht, welche der Seitenwandlageröffnung abgewandt ist. Ist die Seitenwandlageröffnung also relativ zu den ersten Seitenwandöffnungen nach innen versetzt, steht der zweite Längsholm an einem die zweiten Seitenwandöffnungen aufweisenden Ende des Behälterbodens seitlich hervor. Ist die Seitenwandlageröffnung hingegen relativ zu den zweiten Seitenwandöffnungen nach innen versetzt, steht der zweite Längsholm in Querrichtung an einem die ersten Seitenwandöffnungen umfassenden Ende des Behälterbodens seitlich hervor.

Bei einer beispielhaften Ausführungsform umfasst der Rollbehälter nach der Erfindung zwei, drei, vier oder eine Vielzahl von Seitenwandlageröffnungen, in welche zur Lagerung weiterer Seitenwände an dem Behälterboden jeweils ein Längsholm einer weiteren Seitenwand einbringbar ist.

Die Seitenwandlageröffnungen können in Längsrichtung voneinander beabstandet sein. Die Seitenwandlageröffnungen fluchten in Querrichtung also beispielsweise nicht miteinander.

Bei einer bevorzugten Ausführungsform des Rollbehälters nach der Erfindung ist an dem Behälterboden mindestens eine erste Seitenwandlageröffnung vorgesehen, welche relativ zu den ersten Seitenwandöffnungen nach innen versetzt ist. Ferner ist an dem Behälterboden mindestens eine zweite Seitenwandlageröffnung vorgesehen, die relativ zu den zweiten Seitwandöffnungen nach innen versetzt ist.

Die mindestens eine zweite Seitenwandlageröffnung ist in Längsrichtung beispielsweise zu der mindestens einen ersten Seitenwandlageröffnung versetzt, so dass diese in Querrichtung nicht miteinander fluchten. Beispielsweise sind an dem Behälterboden in Längsrichtung abwechselnd erste Seitenwandlageröffnungen und zweite Seitenwandlageröffnungen vorgesehen.

Bei einer bevorzugten Ausführungsform des Rollbehälters nach der Erfindung sind/ist die erste Rastelementaussparung und/oder die zweite Rastelementaussparung trichterförmig.

Die erste Rastelementaussparung und/oder die zweite Rastelementaussparung können/kann eine mit einem Schnelllösepin des Rastelements der weiteren Seitenwand korrespondierende Geometrie aufweisen.

Bei einer beispielhaften Ausführungsform des Rollbehälters nach der Erfindung sind/ist ein Mittelpunkt der ersten Rastelementaussparung, bevorzugt die erste Rastelementaussparung in ihrer Gesamtheit, und/oder ein Mittelpunkt der zweiten Rastelementaussparung, bevorzugt die zweite Rastelementaussparung in ihrer Gesamtheit, von einer Längsmittelachse des Behälterbodens beabstandet.

Beispielsweise umfasst der Behälterboden mindestens zwei drei, vier oder eine Vielzahl erster Rastelementaussparungen und zweiter Rastelementaussparungen zur Aufnahme von Rastelementen zu lagernder weiterer Seitenwände.

Beispielsweise ist die zweite Rastelementaussparung in Längsrichtung zu der ersten Rastelementaussparung versetzt. Insbesondere sind die Rastelementaussparungen derart zueinander versetzt, dass diese teilweise, nicht aber vollständig, miteinander fluchten. Somit ist eine Aufnahme des Rastelements der weiteren Seitenwand in unterschiedliche Positionen, insbesondere Schwenkpositionen an einem Querholm der weiteren Seitenwand, ermöglicht.

Beispielsweise fluchtet die erste Rastelementaussparung, insbesondere ein Mittelpunkt der ersten Rastelementaussparung, in Querrichtung mit der Seitenwandlageröffnung, insbesondere einem Mittelpunkt der Seitenwandlageröffnung, bzw. einer betreffenden der Seitenwandlageröffnungen.

Die zweite Rastelementaussparung oder ein Mittelpunkt der zweiten Rastelementaussparung kann in Längsrichtung von der Seitenwandlageröffnung, insbesondere einem Mittelpunkt der Seitenwandlageröffnung, bzw. einer betreffenden der Seitenwandlageröffnungen beabstandet sein, also in Querrichtung nicht mit dieser fluchten.

Rastelemente der zu lagernden weiteren Seitenwände sind beispielsweise jeweils an dem Querholm der weiteren Seitenwände in Querrichtung um einen definierten Verschiebeweg verschiebbar gelagert. In Abhängigkeit der Position des Rastelements relativ zu dem Querholm ist das Rastelement somit in einer ersten Rastelementaussparung oder einer zweiten Rastelementaussparung anordbar.

Ein Abstand des Mittelpunkts der ersten Rastelementaussparungen von dem Mittelpunkt einer benachbarten zweiten Rastelementaussparung ist beispielsweise kleiner-gleich dem definierten Verschiebeweg, um welchen das Rastelements an dem Querholm verschiebbar ist.

Die Rastelementaussparung(en) kann/können mit der Seitenwandlageröffnung bzw. einer Betreffenden der Seitenwandlageröffnung oder mit dem Seitenwandlageröffnungspaar bzw. einem Betreffenden der Seitenwandlageröffnungspaar in Querrichtung fluchten.

Ein Abstand der Rastelementaussparung zu der Seitenwandlageröffnung in Querrichtung ist beispielsweise mindestens so groß wie ein minimaler Abstand des Rastelements zu dem in der Seitenwandlageröffnung anordbaren Längsholm der weiteren Seitenwand und maximal so groß wie ein maximaler Abstand des Rastelements zu dem in der Seitenwandlageröffnung anordbaren Längsholm der weiteren Seitenwand.

Bei einer beispielhaften Ausführungsform des Rollbehälters nach der Erfindung weist der Behälterboden eine der Anzahl an Seitenwandlageröffnungen oder der Anzahl an Seitenwandlageröffnungspaaren entsprechende Anzahl an Rastelelementaussparungen auf.

Handelt es sich bei den Rastelelementaussparungen um erste Rastelelementaussparungen und zweite Rastelelementaussparungen, entspricht die Anzahl an ersten Rastelementen und die Anzahl an zweiten Rastelelementaussparungen beispielsweise jeweils der Anzahl an Seitenwandlageröffnungen oder der Anzahl an Seitenwandlageröffnungspaaren.

Ein Versatz benachbarter Rastelemente in Längsrichtung entspricht beispielsweise der Summe des Versatzes der ersten Seitenwandlageröffnung relativ zu den ersten Seitenwandlageröffnungen in Querrichtung und des Versatzes der zweiten Seitenwand der Lageröffnung relativ zu den Seitenwandlageröffnungen in Richtung der ersten Seitenwandöffnung in Querrichtung. Somit sind Rastelemente, wenn die Seitenwandlageröffnungen abwechselnd auf in Querrichtung gegenüberliegenden Seiten ausgebildet sind, auf einfache Weise in die Rastelementaussparungen einbringbar.

Ein Versatz der Rastelemente ist beispielsweise kleiner-gleich einem Bewegungsspielraum, um welchen die Rastelemente an einem Querholm der Seitenwände in Querrichtung verschiebbar gelagert sind.

Die Mittelpunkte der Rastelementaussparungen sind in Längsrichtung beispielsweise maximal um den definierten Bewegungsumfang der Querholme zueinander versetzt.

Die Rastelementaussparung(en) können/kann eine derartig mit einem Rastelement der weiteren Seitenwand korrespondierenden Geometrie aufweisen, dass das Rastelement durch Einbringen in die betreffende Rastelementaussparung in eine definierte Lagerposition bringbar ist.

Beispielsweise ist das Rastelement in der definierten Lagerposition derart ausgerichtet, dass das Rastelement eine minimal mögliche Erstreckung in Längsrichtung aufweist.

Das Rastelement zur Befestigung der weiteren Seitenwand an einem Behälterboden ist beispielsweise ein Fallbügel mit einem Schnelllösepin.

Die Rastelementaussparung(en) können/kann eine mit dem Schnelllösepin des Rastelements oder einem Querelement des Rastelements der weiteren Seitenwand korrespondierende Geometrie aufweisen.

Bei einer beispielhaften Ausführungsform des Rollbehälters nach der Erfindung umfasst die Lagerleiste mindestens einen Lagervorsprung. Der Lagervorsprung ist in eine Lagerleistenöffnung des Behälterbodens zur formschlüssigen Lagerung der Lagerleiste an dem Behälterboden anordbar.

Beispielsweise umfasst die mindestens eine Lagerleiste zwei, drei oder vier Lagervorsprünge, welche jeweils in einer Lagerleistenöffnung des Behälterbodens zur formschlüssigen Lagerung der Lagerleiste an dem Behälterboden angeordnet sind.

Die Lagervorsprünge sind in Längserstreckungsrichtung der Lagerleiste beispielsweise voneinander beabstandet.

Die mindestens eine Lagerleiste kann sich in Querrichtung erstrecken, insbesondere zwischen den zwei Seitenwänden.

Die mindestens eine Lagerleiste liegt, wenn diese an dem Behälterboden und/oder den Seitenwänden fixiert ist, beispielsweise, insbesondere flächig, auf dem Behälterboden auf.

Bei einer bevorzugten Ausführungsform des Rollbehälters nach der Erfindung umfasst die mindestens eine Lagerleiste endseitig jeweils ein Umgreifungselement zur Fixierung an einer Betreffenden der Seitenwände.

Die Umgreifungselemente können derart mit der Geometrie der Längsholme der Seitenwände korrespondieren, dass die Lagerleiste, wenn die Umgreifungselemenet sich in Längsrichtung gegenüberliegende Längsholme der Seitenwände umgreifen, insbesondere formschlüssig, an den Seitenwänden fixiert ist.

Die Umgreifungselemente sind beispielsweise in Form U-förmiger Vorsprünge ausgebildet.

Bei einer bevorzugten Ausführungsform des Rollbehälters nach der Erfindung ist die Lagerleiste derart an dem Behälterboden fixiert, dass die mindestens eine Lagerleistenseitenwandlageröffnung in Längsrichtung mit den ersten Seitenwandöffnungen oder den zweiten Seitenwandöffnungen fluchtet.

Bei einer beispielhaften Ausführungsform umfasst der Rollbehälter nach der Erfindung zwei Lagerleisten.

Die zwei Lagerleisten können derart an dem Behälterboden fixiert sein, dass die mindestens eine Lagerleistenwandlageröffnung einer Ersten der Lagerleisten in Längsrichtung mit den ersten Seitenwandöffnungen fluchtet und die mindestens eine Lagerleistenseitenwandlageröffnung der zweiten Lagerleiste in Längsrichtung mit den zweiten Seitenwandöffnungen fluchtet.

Beispielsweise umfassen die Lagerleisten jeweils mindestens zwei, drei, vier oder eine Vielzahl von Lagerleistenseitenwandlageröffnungen.

Die Lagerleisten sind beispielsweise derart an dem Behälterboden fixiert, dass die Lagerleistenwandlageröffnungen einer ersten der Lagerleisten in Querrichtung jeweils mit einer Betreffenden der Lagerleistenseitenwandlageröffnungen der zweiten Lagerleiste fluchten.

Eine Erstreckung der Lagerleisten in Hochrichtung bzw. eine Höhe dieser ist beispielsweise mindestens so groß wie eine Erstreckung eines Bereichs der Längsholme, insbesondere der äußeren Längsholme, in Hochrichtung unterhalb einem unteren Querholm. Die Längsholme der weiteren Seitenwand sind somit beispielsweise in die Lagerleistenwandlageröffnungen derart einbringbar, dass der untere Querholm auf den Lagerleisten aufliegt.

Die Hochrichtung erstreckt sich orthogonal zu der Längsrichtung und der Querrichtung.

Beispielsweise weist die Lagerleiste eine derartige Erstreckung in Hochrichtung auf, dass das Rastelement der weiteren Seitenwand, wenn die weitere Seitenwand an der Lagerleiste gelagert ist, von dem Behälterboden beabstandet ist. Die Lagerleiste umfasst beispielsweise einen Griffbereich, der insbesondere in einem in Lagerleistenlängserstreckungsrichtung mittleren Bereich der Lagerleiste angeordnet ist.

Beispielsweise sind in Längsrichtung beidseits des Griffbereichs Lagerleistenseitenwandlageröffnungen ausgebildet.

Die Erfindung ist im Folgenden anhand in der Zeichnung dargestellte Ausführungsbeispiele näher erläutert. Es zeigt:
- Figur 1: eine perspektivische Ansicht eines Rollbehälters nach einer ersten Ausführungsform der Erfindung;
- Figur 2: eine Draufsicht auf einen Behälterboden des Rollbehälters aus Figur 1;
- Figur 3: eine perspektivische Ansicht des Rollbehälters aus Figur 1 zusammen mit auf dem Rollbehälter gelagerten weiteren Rollbehältern;
- Figur 4: eine Draufsicht auf den Rollbehälter aus Figur 1 zusammen mit den auf dem Rollbehälter gelagerten weiteren Rollbehältern;
- Figur 5: eine Schnittansicht entlang Linie V-V in Figur 4 durch den Rollbehälter aus Figur 1 zusammen mit den auf dem Rollbehälter gelagerten weiteren Rollbehältern;
- Figur 6: eine perspektivische Ansicht eines Rollbehälters nach einer zweiten Ausführungsform der Erfindung;
- Figur 7: eine Draufsicht auf einen Behälterboden des Rollbehälters aus Figur 6;
- Figur 8: eine perspektivische Ansicht des Rollbehälters aus Figur 6 zusammen mit auf dem Rollbehälter gelagerten weiteren Seitenwänden;
- Figur 9: eine Draufsicht auf den Rollbehälter aus Figur 6 zusammen mit den auf dem Rollbehälter gelagerten weiteren Seitenwänden;
- Figur 10: eine Unteransicht des Rollbehälters aus Figur 6 zusammen mit den auf dem Rollbehälter gelagerten weiteren Seitenwänden;
- Figur 11: eine perspektivische Ansicht eines Rollbehälters nach einer dritten Ausführungsform der Erfindung vor einer Montage von Lagerleisten des Rollbehälters;
- Figur 12: eine Figur 11 entsprechende Ansicht, während der Montage der Lagerleisten;
- Figur 13: eine Figur 11 entsprechende Ansicht mit montierten Lagerleisten;
- Figur 14: eine Figur 13 entsprechende Ansicht zusammen mit auf dem Rollbehälter gelagerten weiteren Seitenwänden;
- Figur 15: eine Schnittansicht entlang Linie XV-XV in Figur 14 durch den Rollbehälter aus Figur 14 zusammen mit den weiteren Seitenwänden;
- Figur 16: eine perspektivische Ansicht der Lagerleiste;
- Figur 17: eine weitere perspektivische Ansicht der Lagerleiste;
- Figur 18: eine perspektivische Ansicht eines Rollbehälters nach einer vierten Ausführungsform der Erfindung; und
- Figur 19: eine perspektivische Ansicht einer Lagerleiste des Rollbehälters aus Figur 18.

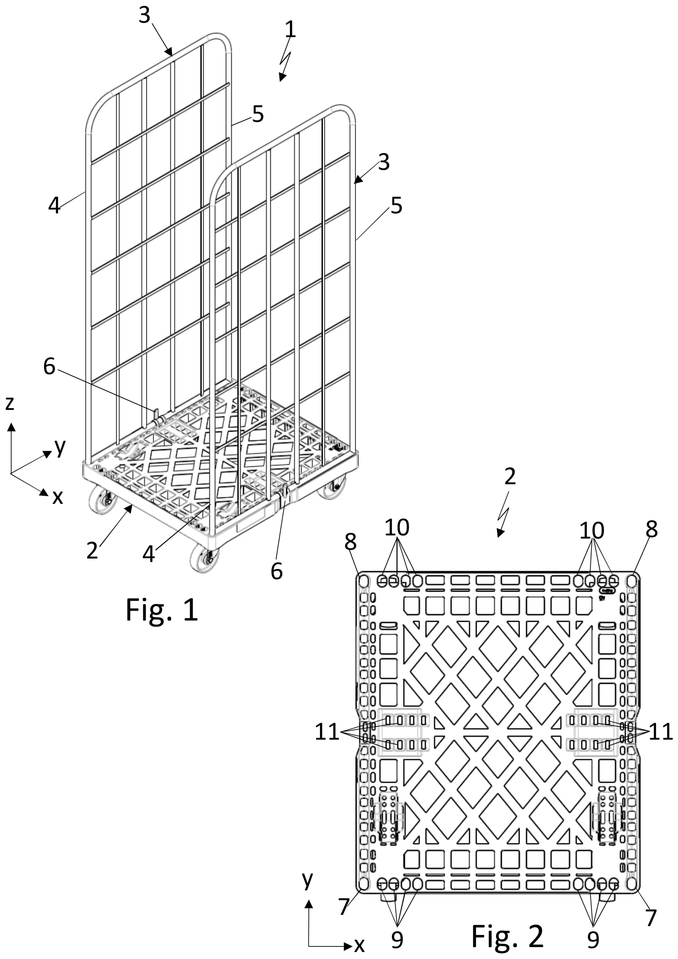

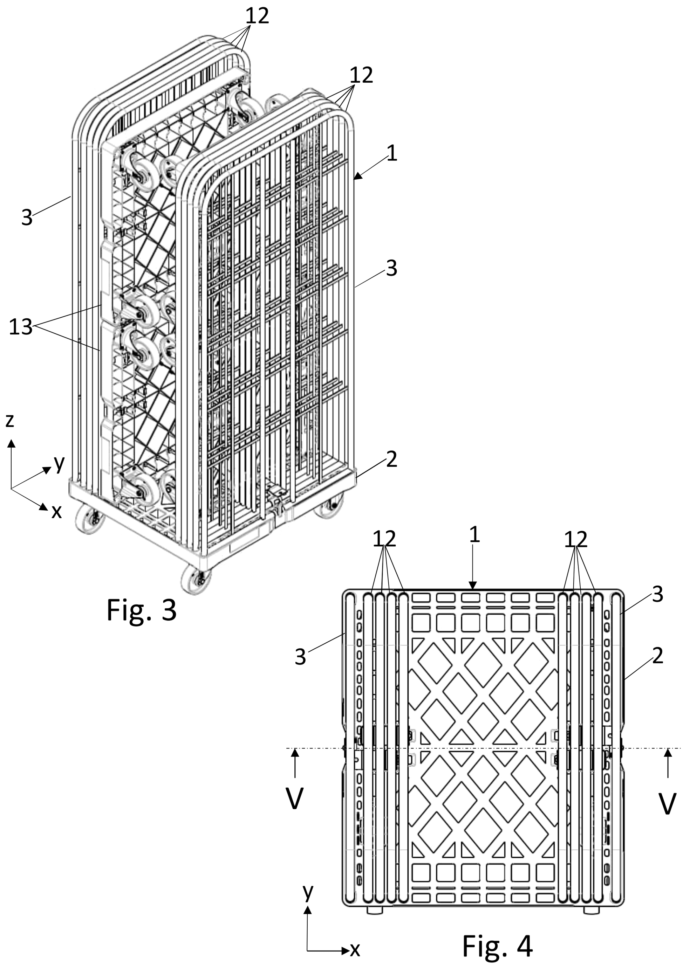

In den Figuren 1 und 3 bis 5 ist ein Rollbehälter 1 nach einer ersten Ausführungsform der Erfindung dargestellt. Die Figuren 3 bis 5 zeigen den Rollbehälter zusammen mit weiteren Seitenwänden und/oder weiteren Bodenbehältern, welche auf dem Rollbehälter 1 gelagert sind. In Figur 2 ist ein Behälterboden 2 des Rollbehälters 1 in Alleindarstellung gezeigt.

Der Rollbehälter 1 umfasst den Behälterboden 2 und zwei Seitenwände 3. Die Seitenwände 3 sind an in Längsrichtung x gegenüberliegenden Seiten des Behälterbodens 2 angeordnet. Zur Fixierung der Seitenwände 3 an dem Behälterboden 2 umfasst der Behälterboden 2 an in Längsrichtung x gegenüberliegenden, endseitigen Bereichen jeweils eine erste Seitenwandöffnung 7 und eine zweite Seitenwandöffnung 8. Die erste Seitenwandöffnung 7 und die zweite Seitenwandöffnung 8 sind an in Querrichtung y gegenüberliegenden Enden des Behälterbodens 2 vorgesehen.

Die Seitenwände 3 weisen jeweils zwei Längsholme 4 und 5 auf, welche die Seitenwände 3 in Querrichtung y begrenzen. Die Längsholme 4 sind jeweils in eine Betreffende der ersten Seitenwandöffnungen 7 eingebracht und die Längsholme 5 sind jeweils in eine Betreffende der zweiten Seitenwandöffnungen 8 eingebracht. Die Seitenwände 3 sind mittels eines Rastelements 6 an dem Behälterboden 2 lösbar fixiert, so dass ein Entfernen der Seitenwände 3 aus den Seitenwandöffnungen 7 und 8 ausgeschlossen ist, wenn das Rastelement 6 in einer Sicherungsposition ist, in welcher ein Querelement 15 des Rastelement 6 untergreift. Zum Lösen der Rastelemente 6 aus der Sicherungsposition umfassen die Rastelemente 6 jeweils einen Schnelllösepin 14. Der Schnelllösepin 14 erstreckt sich insbesondere orthogonal zu dem Querelement 15 und steht in der Sicherungsposition des Rastelements 6 in Hochrichtung z von einem Querholm der betreffenden Seitenwand 3 nach oben hervor.

Wie aus Figur 2 ersichtlich ist, umfasst der Bodenbehälter 2 Seitenwandlageröffnungen 9 und 10. Erste Seitenwandlageröffnungen 9 der Seitenwandlageröffnungen 9 und 10 sind an einem in Querrichtung y ersten Randbereich des Behälterbodens 2 ausgebildet und fluchten in Längsrichtung x mit den ersten Seitenwandöffnungen 7. Zweite Seitenwandlageröffnungen 10 der Seitenwandlageröffnungen 9 und 10 sind an einem in Querrichtung y dem ersten Randbereich gegenüberliegenden zweiten Randbereich des Behälterbodens 2 ausgebildet. Die zweiten Seitenwandlageröffnungen 10 fluchten in Längsrichtung x mit den zweiten Seitenwandöffnungen 8. In Querrichtung y fluchten die ersten Seitenwandlageröffnungen 9 jeweils mit einer Betreffenden der zweiten Seitenwandlageröffnungen 10 und bilden mit dieser ein Seitenwandlageröffnungspaar. Zur Lagerung weiterer Seitenwände 12 an dem Behälterboden 2 sind die weiteren Seitenwände 12, insbesondere Längsholme dieser, jeweils in ein Seitenwandlageröffnungspaare einbringbar.

Die erste Seitenwandlageröffnung 9 und die zweite Seitenwandlageröffnung 10 weisen mit der ersten Seitenwandöffnung 7 und der zweiten Seitenwandöffnung 8 korrespondierende Geometrien auf.

Zwischen den Seitenwandlageröffnungspaaren sind jeweils zwei Rastelementaussparungen 11 in dem Behälterboden 2 ausgebildet, welche mit dem Seitenwandlageröffnungspaar in Querrichtung y fluchten.

Die Rastelemente 6 sind an den Querholmen in Querrichtung y um einen definierten Verschiebeweg verschiebbar gelagert. Die Rastelementaussparungen sind derart an dem Behälterboden 2 angeordnet, dass Rastelemente 6 der weiteren Seitenwände 12 in beide zwischen den Rastelementpaaren angeordnete Rastelementaussparungen 11 einbringbar sind.

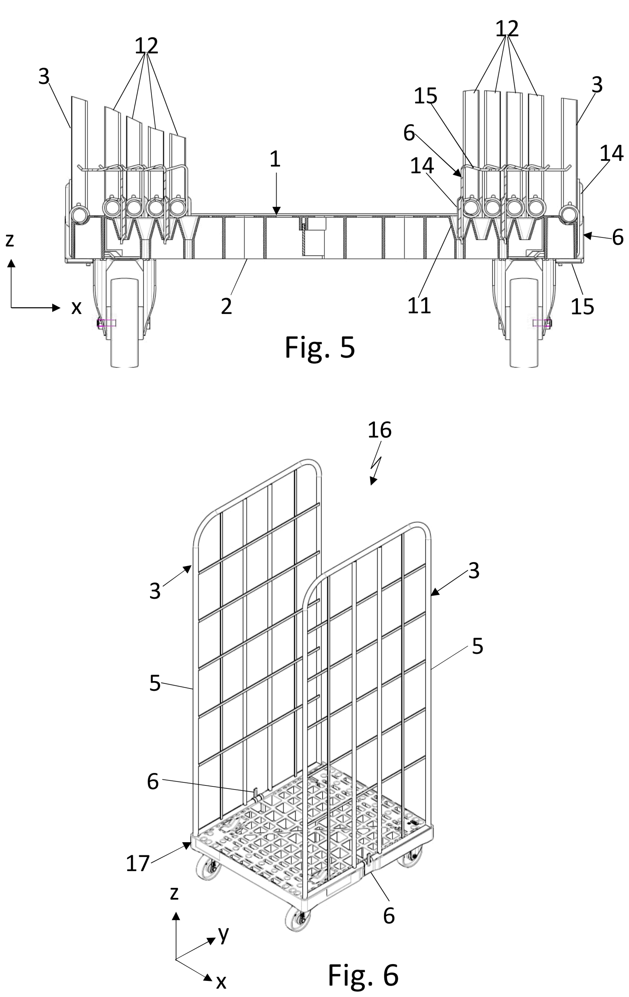

Wie aus Figur 5 ersichtlich ist, werden Rastelemente 6 benachbarter weiterer Seitenwände 12 insbesondere jeweils in Rastelementaussparungen 11 angeordnet, welche in Querrichtung y zueinander versetzt sind. Das heißt, wenn ein Rastelement 6 einer ersten weiteren Seitenwand 12 in einer Rastelementaussparung 11 angeordnet ist, welche der ersten Seitenwandlageröffnung 9 zugewandt ist, ist ein Rastelement 6 einer weiteren Seitenwand 12, welche in einem benachbarten Seitenwandlageröffnungspaar gelagert ist, in einer Rastelementaussparung 11 angeordnet, welche den zweiten Seitenwandlageröffnungen 10 bzw. dem zweiten Randbereich zugewandt ist.

Die Rastelementaussparungen 11 weisen eine mit den Rastelementen 6, insbesondere den Schnelllösepins 14 der Rastelemente 6, korrespondierende Geometrie auf. Die Rastelemente 6 sind somit, wenn diese in eine Rastelementaussparung 11 eingebracht sind, in einer definierten Position gelagert, insbesondere derart, dass sich der Schnelllösepin 14 in Hochrichtung z bzw. vertikal erstreckt. Das Querelement 15 erstreckt sich hierbei bevorzugt in Längsrichtung x, das heißt horizontal.

In den Figuren 6 und 8 bis 10 ist ein Rollbehälter 16 nach einer zweiten Ausführungsform der Erfindung gezeigt. Der Rollbehälter 16 nach der zweiten Ausführungsform entspricht im Wesentlichen dem im Obigen beschriebenen und in den Figuren 1 bis 5 dargestellten Rollbehälter 1 nach der ersten Ausführungsform. Mithin werden im Folgenden lediglich die Unterscheidungsmerkmale erläutert. Im Übrigen gelten die obigen Ausführungsformen entsprechend. Baugleiche Elemente sind in den Figuren mit den gleichen Bezugszeichen gekennzeichnet.

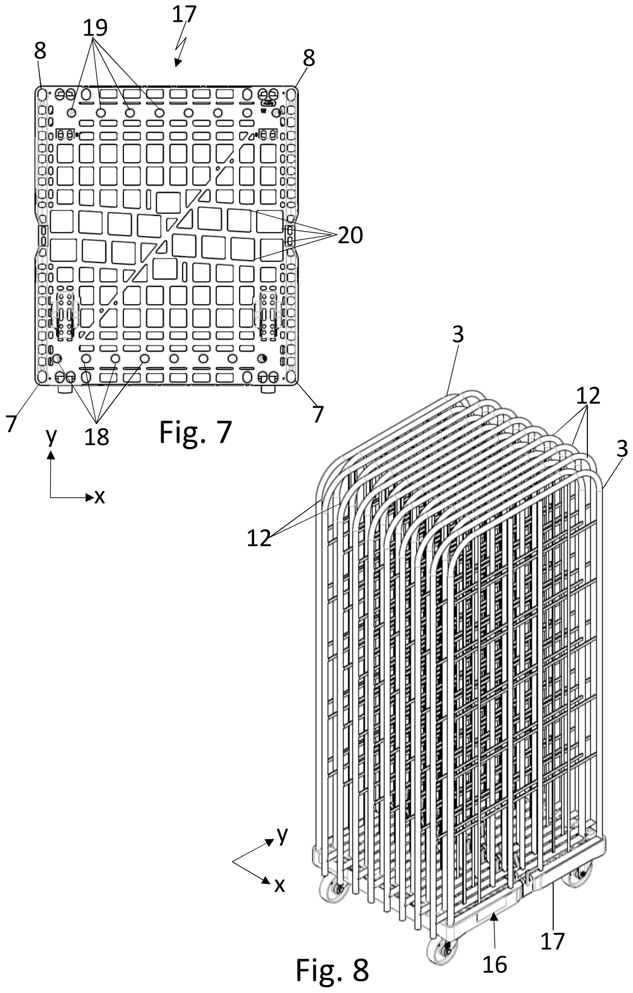

Wie insbesondere aus der Alleindarstellung eines Behälterbodens 17 des Rollbehälters 16 in Figur 7 ersichtlich ist, umfasst der Behälterboden 17 Seitenwandlageröffnungen 18 und 19. Erste Seitenwandlageröffnungen 18 dieser sind in einem in Querrichtung y ersten Randbereich derart angeordnet, dass die ersten Seitenwandlageröffnungen 18 bezogen auf die ersten Seitenwandöffnungen 7 in Querrichtung y nach innen, das heißt in Richtung der zweiten Seitenwandöffnungen 8, bzw. in Richtung einer Behälterbodenlängsmittelebene versetzt sind. In einem in Querrichtung y gegenüberliegenden zweiten Randbereich sind die zweiten Seitenwandlageröffnungen 19 vorgesehen. Die zweiten Seitenwandlageröffnungen 19 sind in Querrichtung y bezogen auf die zweiten Seitenwandöffnungen 8 in Richtung der Behälterbodenlängsmittelebene nach innen versetzt. Die ersten Seitenwandlageröffnungen 18 und die zweiten Seitenwandlageröffnungen 19 sind in Längsrichtung x jeweils abwechselnd an dem Behälterboden 2 ausgebildet. Bei einer Projektion der ersten Seitenwandlageröffnungen 18 in Querrichtung y ist also jeweils eine Betreffende der zweiten Seitenwandlageröffnungen 19 zwischen den ersten Seitenwandlageröffnungen 18 angeordnet.

Wie aus den Figuren 8 bis 10 ersichtlich ist, stehen weitere Seitenwände 12, welche an dem Behälterboden 17 gelagert sind, somit, wenn diese in den Seitenwandlageröffnungen 18 und 19 angeordnet sind, abwechselnd an in Querrichtung y gegenüberliegenden Seiten des Behälterbodens 2 seitlich hervor.

Der Behälterboden 17 umfasst Rastelementaussparungen 20. Insbesondere umfasst der Behälterboden 17 eine erste Reihe von Rastelementaussparungen 20, welche sich in Längsrichtung x erstreckt und eine zu der ersten Reihe in Querrichtung y benachbarte zweite Reihe von Rastelementaussparungen 20. Die Reihen sind in ihrer Erstreckung in Längsrichtung x in Richtung einer Quermittelebene in Querrichtung y geringfügig geneigt und insbesondere spiegelsymmetrisch zu einer Diagonalen des Bodenbehälters 17 ausgebildet. Die Rastelementaussparungen weisen in einer Draufsicht ein rechteckiges oder quadratisches Profil oder die Form eines Parallelogramms auf.

Die Rastelemente 6 der weiteren Seitenwände 12 sind in Abhängigkeit, ob die weiteren Seitenwände 12 in den ersten Seitenwandlageröffnungen 18 oder in den zweiten Seitenwandlageröffnungen 19 angeordnet sind, in einer Rastelementaussparung 20 der ersten Reihe oder einer Rastelementaussparung 20 der zweiten Reihe angeordnet. Das heißt, alle in ersten Seitenwandlageröffnungen 18 angeordnete weitere Seitenwände 12 sind in den Rastelementaussparungen 20 der ersten Reihe angeordnet, welche den zweiten Seitenwandöffnungen 8 zugewandt ist, wobei alle Rastelemente 6 der weiteren Seitenwände 12, welche in den zweiten Seitenwandlageröffnungen 19 gelagert sind, in Rastelementaussparungen 20 der den ersten Seitenwandöffnungen 7 zugewandten zweiten Reihe angeordnet sind.

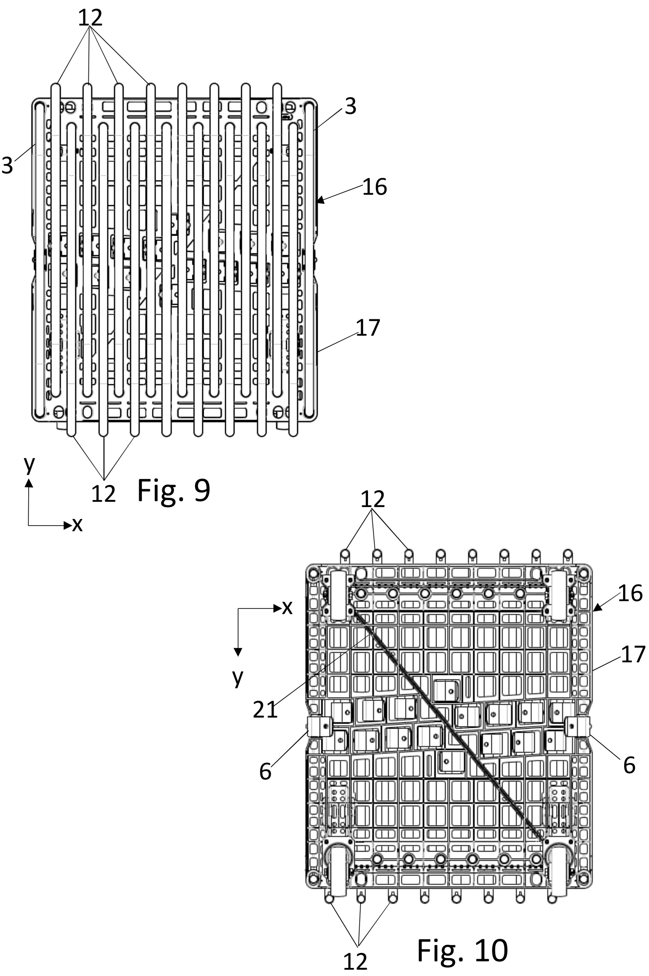

Wie aus Figur 10 ersichtlich ist, umfasst der Behälterboden 17 eine Verstärkungsstruktur, welche sich insbesondere diagonal erstreckt und an einer Unterseite des Behälterbodens 17 fixiert ist.

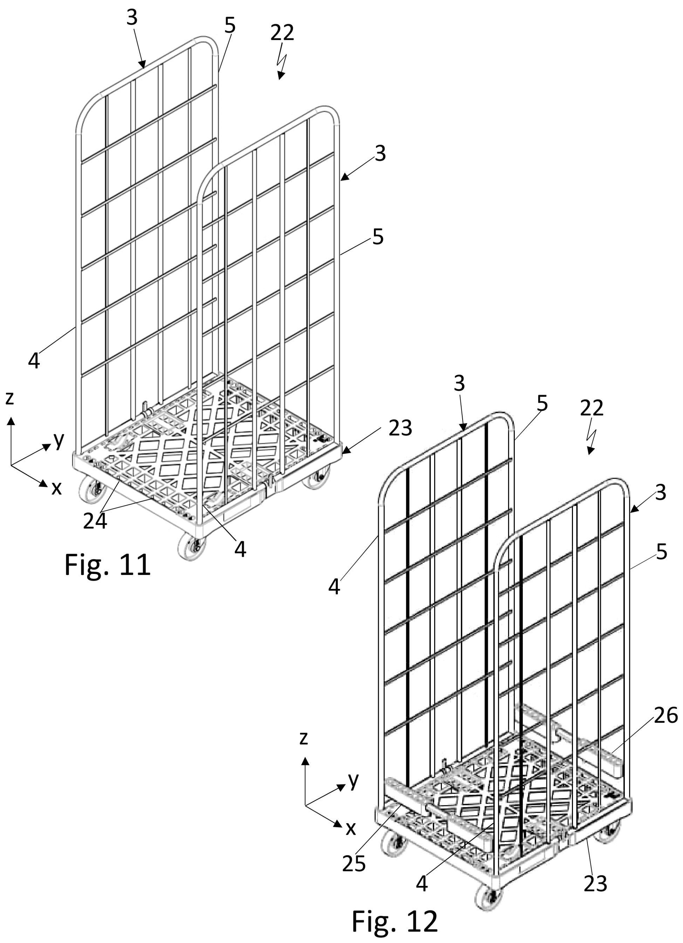

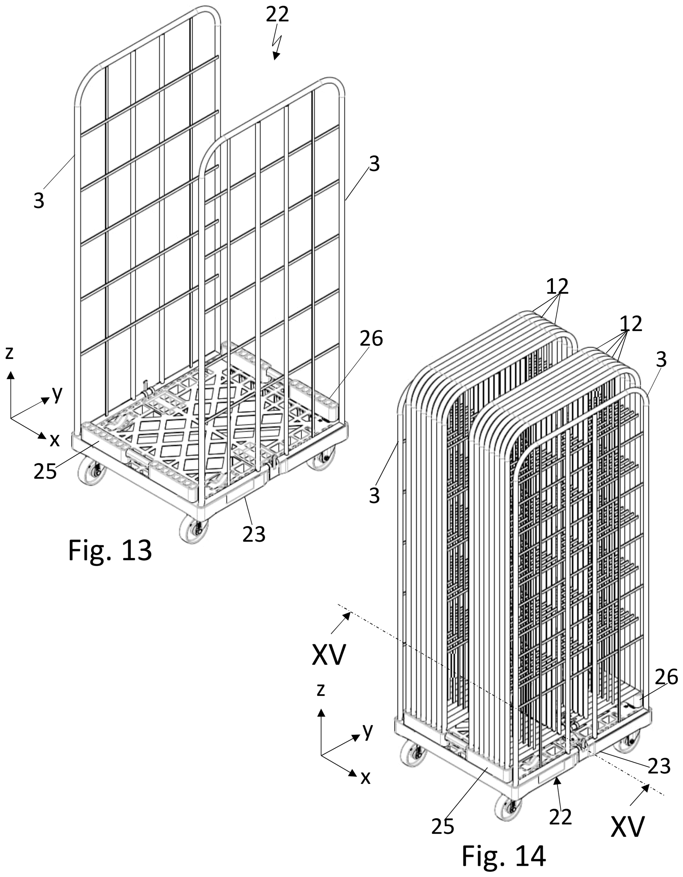

Die Figuren 11 bis 15 zeigen einen Rollbehälter 22 nach einer dritten Ausführungsform der Erfindung. Der Rollbehälter 22 nach der dritten Ausführungsform entspricht im Wesentlichen dem im Obigen beschriebenen und in den Figuren 1 bis 5 dargestellten Rollbehälter 1 nach der ersten Ausführungsform. Mithin werden im Folgenden lediglich die Unterscheidungsmerkmale erläutert. Im Übrigen gelten die obigen Ausführungsformen entsprechend. Baugleiche Elemente sind in den Figuren mit den gleichen Bezugszeichen gekennzeichnet.

Der Rollbehälter 22 umfasst einen Behälterboden 23, welcher an in Querrichtung y gegenüberliegenden Seiten jeweils zwei Lagerleistenöffnungen 24 umfasst. Es ist ebenfalls denkbar, lediglich eine Lagerleistenöffnung oder mehr als zwei Lagerleistenöffnungen 24 an dem Behälterboden 23 vorzusehen.

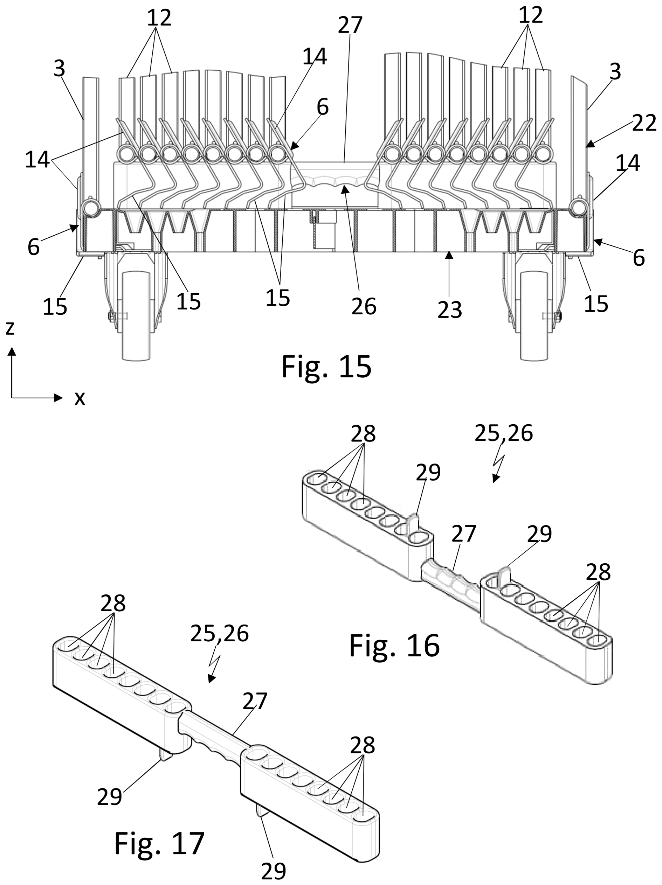

Der Rollbehälter 22 umfasst zwei Lagerleisten 25 und 26, die in den Figuren 16 und 17 in Alleindarstellung gezeigt sind. Die Lagerleisten 25 und 26 weisen jeweils zwei Lagervorsprünge 29 auf, welche mit den Lagerleistenöffnungen 24 korrespondieren. Zur Lagerung weiterer Seitenwände 12 an dem Behälterboden 23 werden die Lagerleisten 25 und 26 an dem Behälterboden 23 derart angeordnet, dass die Lagervorsprünge 29 jeweils in Betreffenden der Lagerleistenöffnungen 24 angeordnet sind. Die Lagerleisten 25 und 26 erstrecken sich hierbei jeweils in Längsrichtung x und sind auf in Querrichtung y gegenüberliegenden Seiten des Behälterbodens 23 angeordnet.

Die Lagerleisten 25 und 26 umfassen jeweils Lagerleistenseitenwandlageröffnungen 28. Die Lagerleiste 25 ist derart an dem Behälterboden 23 angeordnet, dass die Lagerleistenseitenwandlageröffnungen 28 dieser in Längsrichtung x mit den ersten Seitenwandöffnungen 7 fluchten. Die Lagerleiste 26 ist derart an dem Behälterboden 23 gelagert, dass die Lagerleistenseitenwandlageröffnungen 28 dieser in Längsrichtung x mit den zweiten Seitenwandöffnungen 8 fluchten. In Querrichtung y fluchten die Lagerleistenwandlageröffnungen 28 der ersten Lagerleiste 25 jeweils mit einer betreffenden Lagerleistenwandlageröffnung 28 der Lagerleiste 26. Zur Lagerung der weiteren Seitenwände 12 an den Behälterboden 23 werden Längsholme der Seitenwände jeweils miteinander in Querrichtung y fluchtende Lagerleistenwandlageröffnungen 28 eingebracht.

Die Lagerleisten 25 und 26 weisen eine derartige Erstreckung in Hochrichtung z auf, dass die Rastelemente 6 der weiteren Seitenwände 12, wenn die weiteren Seitenwände 12 in die Lagerleistenseitenwandlageröffnungen 28 eingebracht sind, von dem Behälterboden 23 zumindest geringfügig beabstandet sind und somit frei an Querholmen der weiteren Seitenwände 12 hängen.

Zur einfachen Montage und Demontage der Lagerleisten 25 und 26 umfassen diese jeweils ein Griffelement 27. Das Griffelement 27 kann insbesondere zwischen zwei die Lagerleistenseitenwandlageröffnungen 28 umfassenden Bereichen angeordnet sein.

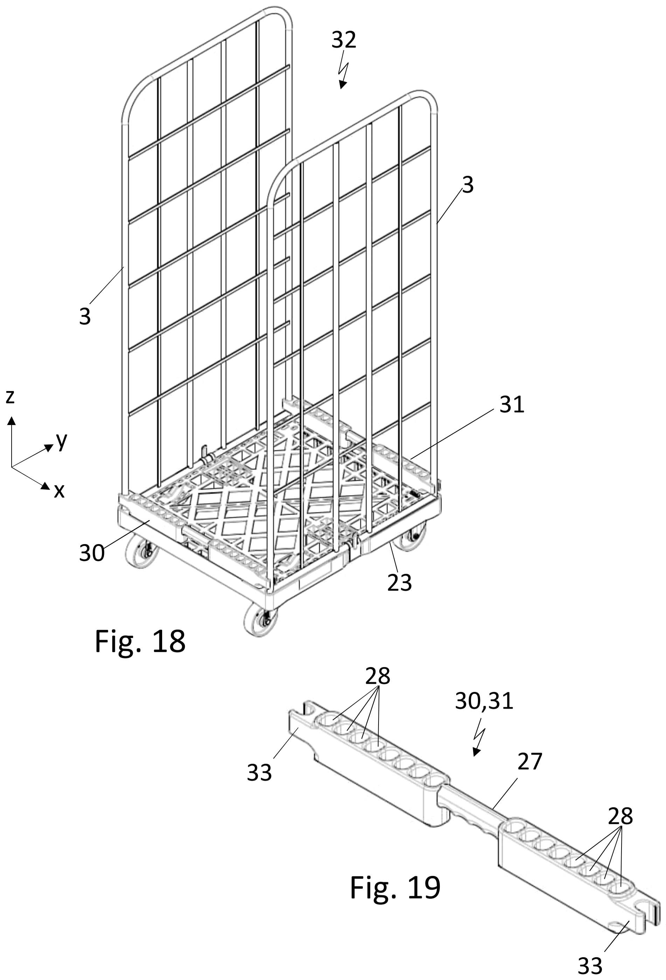

In den Figuren 18 und 19 ist ein Rollbehälter 32 nach einer vierten Ausführungsform der Erfindung gezeigt. Der Rollbehälter 32 nach der vierten Ausführungsform entspricht im Wesentlichen dem im Obigen beschriebenen und in den Figuren 11 bis 17 dargestellten Rollbehälter 22 nach der dritten Ausführungsform. Mithin werden im Folgenden lediglich die Unterscheidungsmerkmale erläutert. Im Übrigen gelten die obigen Ausführungsformen entsprechend. Baugleiche Elemente sind in den Figuren mit den gleichen Bezugszeichen gekennzeichnet.

Anstelle der Lagerleisten 25 und 26 umfasst der Rollbehälter 32 nach der vierten Ausführungsform zwei Lagerleisten 30 und 31. Die Lagerleisten 30 und 31 unterscheiden sich von den Lagerleisten 25 und 26 dadurch, dass diese anstelle der Lagervorsprünge 29 jeweils zwei U-förmiger Vorsprünge 33 umfassen.

Die U-förmigen Vorsprünge 33 sind an gegenüberliegenden Enden jeder der Lagerleisten 30 und 31 angeordnet. Bei einer funktionsgemäßen Montage der Lagerleisten 30 und 31 liegen diese auf dem Behälterboden 23 auf, wobei die U-förmigen Vorsprünge 33 sich in Längsrichtung x gegenüberliegende Längsholmen 4 bzw. 5 der Seitenwände 3 derart umgreifen, dass die Lagerleisten 30 und 31 gegen ein Verschieben in Längsrichtung x und in Querrichtung y durch Formschluss positionsgesichert bzw. fixiert sind.

### Bezugszeichenliste:

- 1: Rollbehälter
- 2: Behälterboden
- 3: Seitenwand
- 4: Längsholm
- 5: Längsholm
- 6: Rastelement
- 7: erste Seitenwandöffnung
- 8: zweite Seitenwandöffnung
- 9: erste Seitenwandlageröffnung
- 10: zweite Seitenwandlageröffnung
- 11: Rastelementaussparung
- 12: Weitere Seitenwand
- 13: Weiterer Bodenbehälter
- 14: Schnelllösepin
- 15: Querelement
- 16: Rollbehälter
- 17: Behälterboden
- 18: erste Seitenwandlageröffnung
- 19: zweite Seitenwandlageröffnung
- 20: Rastelementaussparung
- 21: Verstärkungsstruktur
- 22: Rollbehälter
- 23: Behälterboden
- 24: Lagerleistenöffnung
- 25: Lagerleiste
- 26: Lagerleiste
- 27: Griffelement
- 28: Lagerleistenseitenwandlageröffnung
- 29: Lagervorsprung
- 30: Lagerleiste
- 31: Lagerleiste
- 32: Rollbehälter
- 33: U-förmiger Vorsprung

- x: Längsrichtung
- y: Querrichtung
- z: Hochrichtung

## Patentansprüche

1. Rollbehälter, insbesondere eine Rollpalette, umfassend einen Behälterboden (2, 17, 23) und zwei Seitenwände (3), die an in Längsrichtung (x) gegenüberliegenden Seiten des Behälterbodens (2, 17, 23) angeordnet sind und jeweils einen ersten Längsholm (4), der in einer ersten Seitenwandöffnung (7) des Behälterbodens (2, 17, 23) angeordnet ist, und einen zweiten Längsholm (5) umfassen, der in einer zweiten Seitenwandöffnung (8) des Behälterbodens (2, 17, 23) angeordnet ist, wobei die ersten Seitenwandöffnungen (7) miteinander in Längsrichtung (x) fluchten und die zweiten Seitenwandöffnungen (8) miteinander in Längsrichtung (x) fluchten, **dadurch gekennzeichnet,**
**dass** der Behälterboden (2, 17) mindestens eine Seitenwandlageröffnung, in welche zur Lagerung einer weiteren Seitenwand (12) an dem Behälterboden (2, 17) ein Längsholm der weiteren Seitenwand (12) einbringbar ist, und mindestens eine erste Rastelementaussparung (11, 20) und mindestens eine zweite Rastelementaussparung (11, 20) zur Aufnahme eines Rastelements (6) der weiteren Seitenwand (12) aufweist, wobei die erste Rastelementaussparung (11, 20) in Querrichtung (y) mit der zweiten Rastelementaussparung (11, 20) teilweise oder vollständig fluchtet; und/oder
**dass** an dem Behälterboden (23) und/oder den zwei Seitenwänden (3) mindestens eine Lagerleiste (25, 26, 30, 31) lösbar fixiert ist, die mindestens eine Lagerleistenseitenwandlageröffnung (28) umfasst, in welche zur Lagerung einer weiteren Seitenwand (12) an dem Behälterboden (23) ein Längsholm der weiteren Seitenwand (12) einbringbar ist.

2. Rollbehälter nach Anspruch 1, **dadurch gekennzeichnet, dass** der Behälterboden (2) mindestens ein Seitenwandlageröffnungspaar umfasst, welches aus zwei Seitenwandlageröffnungen (9, 10) besteht, in welchen zur Lagerung der weiteren Seitenwand (12) an dem Behälterboden (2) Längsholme der weiteren Seitenwand (12) einbringbar sind, wobei eine erste der Seitenwandlageröffnungen (9, 10) mit den ersten Seitenwandöffnungen (7) in Längsrichtung (x) fluchtet, und die zweite Seitenwandlageröffnung (10) mit den zweiten Seitenwandöffnungen (8) in Längsrichtung (x) fluchtet und die erste Seitenwandlageröffnung (9) mit der zweiten Seitenwandlageröffnung (10) in Querrichtung (y) fluchtet.

3. Rollbehälter nach Anspruch 2, **gekennzeichnet durch** mindestens zwei, drei, vier oder eine Vielzahl von Seitenwandlageröffnungspaaren zur Lagerung weitere Seitenwände.

4. Rollbehälter nach Anspruch 1, **dadurch gekennzeichnet, dass** die mindestens eine Seitenwandlageröffnung (18, 19), in Längsrichtung (x) zwischen den ersten Seitenwandöffnungen (7) und zwischen den zweiten Seitenwandöffnungen (8) angeordnet ist und in Querrichtung (y) derart relativ zu den ersten Seitenwandöffnungen (7) in Richtung der zweiten Seitenwandöffnungen (8) nach innen oder relativ zu den zweiten Seitenwandöffnungen (8) in Richtung der ersten Seitenwandöffnungen (7) nach innen versetzt ist, dass bei Einbringen eines Längsholmes der weiteren Seitenwand (12) in die Seitenwandlageröffnung (18, 19) ein weiterer Längsholm der weiteren Seitenwand (12) in Querrichtung (y) an einer der Seitenwandlageröffnung (18, 19) abgewandten Seite des Behälterbodens (17) von dem Behälterboden (17) seitlich hervorsteht.

5. Rollbehälter nach Anspruch 4, **gekennzeichnet durch** mindestens zwei, drei, vier oder eine Vielzahl von Seitenwandlageröffnungen (18, 19), in welche jeweils zur Lagerung weiterer Seitenwände an dem Behälterboden (17) jeweils ein Längsholm einer weiteren Seitenwand (12) einbringbar ist.

6. Rollbehälter nach Anspruch 5, **dadurch gekennzeichnet, dass** mindestens eine erste der Seitenwandlageröffnungen (18) in Querrichtung (y) relativ zu den ersten Seitenwandöffnungen (7) in Richtung der zweiten Seitenwandöffnungen (8) nach innen versetzt ist und mindestens eine zweite der Seitenwandlageröffnungen (19) in Querrichtung (y) relativ zu den zweiten Seitenwandöffnungen (8) in Richtung der ersten Seitenwandöffnungen (7) nach innen versetzt ist.

7. Rollbehälter nach einem der Ansprüche 1 bis 6, **dadurch gekennzeichnet, dass** die erste Rastelementaussparung (11, 20) und/oder die zweite Rastelementaussparung (11, 20) trichterförmig sind/ist.

8. Rollbehälter nach einem der Ansprüche 1 bis 7, **dadurch gekennzeichnet, dass** die erste Rastelementaussparung (11, 20) und/oder die zweite Rastelementaussparung (11, 20) eine mit einem Schnelllösepin (14) des Rastelements (6) der weiteren Seitenwand (12) korrespondierende Geometrie aufweisen/aufweist.

9. Rollbehälter nach einem der Ansprüche 1 bis 8, **dadurch gekennzeichnet, dass** ein Mittelpunkt der ersten Rastelementaussparung (11, 20) und/oder ein Mittelpunkt der zweiten Rastelementaussparung (11, 20) von einer Längsmittelachse des Behälterbodens (2, 17, 23) beabstandet sind/ist.

10. Rollbehälter nach einem der Ansprüche 1 bis 9, **dadurch gekennzeichnet, dass** der Behälterboden (2, 17) eine der Anzahl an Seitenwandlageröffnungen (18, 19) oder an Seitenlageröffnungspaaren entsprechende Anzahl an ersten Rastelementaussparungen (11, 20) und/oder an zweiten Rastelementaussparungen (11, 20) umfasst.

11. Rollbehälter nach Anspruch 10, **dadurch gekennzeichnet, dass** die ersten Rastelementaussparungen (11, 20) in Querrichtung (y) miteinander teilweise oder vollständig fluchten und/oder dass die zweiten Rastelementaussparungen (11, 20) in Querrichtung (y) miteinander teilweise oder vollständig fluchten.

12. Rollbehälter nach einem der Ansprüche 1 bis 11, **dadurch gekennzeichnet, dass** die mindestens eine erste Rastelementaussparung (11, 20) und/oder die mindestens eine zweite Rastelementaussparung (11, 20) eine mit einem Rastelement der weiteren Seitenwand (12) derart korrespondierende Form aufweisen, dass das Rastelement (6) in der ersten Rastelementaussparung (11, 20) und/oder in der zweiten Rastelementaussparung (11, 20) in einer definierten Ausrichtung lagerbar ist.

13. Rollbehälter nach einem der Ansprüche 1 bis 12, **dadurch gekennzeichnet, dass** die Lagerleiste (25, 26) mindestens einen Lagervorsprung (29) umfasst, welcher in eine Lagerleistenöffnung (24) des Behälterbodens (23) zur formschlüssigen Lagerung der Lagerleiste (25, 26) an dem Behälterboden (23) angeordnet ist, und/oder dass die Lagerleiste (25, 26) zur formschlüssigen Verbindung der Lagerleiste (30, 31) mit den zwei Seitenwänden (3) endseitig jeweils ein Umgreifungselement, insbesondere einen U-förmigen Vorsprung (33), umfasst.

14. Rollbehälter nach einem der Ansprüche 1 bis 13, **dadurch gekennzeichnet, dass** die Lagerleiste (25, 26, 30, 31) derart an dem Behälterboden (23) und/oder den zwei Seitenwänden (3) fixiert ist, dass die mindestens eine Lagerleistenseitenwandlageröffnung (28) in Längsrichtung (x) mit den ersten Seitenwandöffnungen (7) oder den zweiten Seitenwandöffnungen (8) fluchtet.

15. Rollbehälter nach einem der Ansprüche 1 bis 14, **gekennzeichnet durch** zwei Lagerleisten (25, 26, 30, 31), welche derart an dem Behälterboden (23) und/oder den zwei Seitenwänden (3) fixiert sind, dass die mindestens eine Lagerleistenseitenwandlageröffnung (28) einer Ersten der Lagerleisten (25, 30) in Längsrichtung (x) mit den ersten Seitenwandöffnungen (7) fluchtet und die mindestens eine Lagerleistenseitenwandlageröffnung (28) der zweiten Lagerleisten (26, 31) in Längsrichtung (x) mit den zweiten Seitenwandöffnungen (8) fluchtet.

16. Rollbehälter nach Anspruch 15, **dadurch gekennzeichnet, dass** die zwei Lagerleisten (25, 26, 30, 31) jeweils mindestens zwei, drei, vier oder eine Vielzahl von Lagerleistenseitenwandlageröffnungen (28) umfassen, wobei die Lagerleisten derart an dem Behälterboden (23) fixiert sind, dass die Lagerleistenseitenwandlageröffnung (28) einer Ersten der Lagerleisten (25, 30) in Querrichtung (y) jeweils mit einer betreffenden Lagerleistenseitenwandlageröffnung (28) der zweiten Lagerleiste (26, 31) fluchten.

17. Rollbehälter nach einem der Ansprüche 1 bis 16, **dadurch gekennzeichnet, dass** eine Erstreckung der Lagerleiste (25, 26, 30, 31) in Hochrichtung (z) mindestens so groß ist wie eine Erstreckung eines der Längsholme der weiteren Seitenwand (12) in Hochrichtung (z) unterhalb eines unteren Querholms.

18. Rollbehälter nach einem der Ansprüche 1 bis 17, **dadurch gekennzeichnet, dass** eine Erstreckung der Lagerleiste (25, 26, 30, 31) in Hochrichtung (z) mindestens so groß ist, dass ein Rastelement der weiteren Seitenwand (12) von dem Behälterboden (23) beabstandet ist, wenn die weitere Seitenwand (12) an der Lagerleiste (25, 26, 30, 31) gelagert ist.
